# EUROPEAN PATENT APPLICATION

(11) **EP 4 516 883 A1**
(43) Date of publication of application: **05.03.2025**
(21) Application number: 24166861.5
(22) Date of filing: 27.03.2024
(51) Int. Cl.: C10G 47/26, C10G 7/06, C04B 35/532, C04B 38/00, C10G 31/10

(54) **SINTERING AID COMPOSITION**

(30) Priority: 31.08.2023 RU 2023122669
(71) Applicant: TAIF Joint-Stock Company, 420012 Kazan (RU)
(72) Inventor: SHIGABUTDINOV, Albert Kashafovich, 420015 Kazan (RU); PRESNYAKOV, Vladimir Vasilievich, 420081 Kazan (RU); SHIGABUTDINOV, Ruslan Albertovich, 420081 Kazan (RU); AKHUNOV, Rustem Nazyifovich, 420140 Kazan (RU); IDRISOV, Marat Rinatovich, 420081 Kazan (RU); NOVIKOV, Maksim Anatolievich, 423548 Nizhnekamsk (RU); KHRAMOV, Aleksei Aleksandrovich, 423582 Nizhnekamsk (RU); KONOVNIN, Andrei Aleksandrovich, 423584 Nizhnekamsk (RU); URAZAIKIN, Artur Semenovich, 423571 Nizhnekamsk (RU); SUBRAMANIAN, Viswanathan Anand, Sugar Land, 77479 (US)
(74) Representative: Hannke Bittner & Partner mbB Regensburg

(57) **Abstract**

The present invention relates to petrochemistry, specifically to a sintering aid composition for manufacturing carbonaceous articles for the metallurgical industry. The sintering aid composition for manufacturing carbonaceous articles consists of a concentrated residue from slurry-phase hydrocracking of heavy oil feedstock, has a content of aromatic hydrocarbons in the range from 23 to 27 wt.%, wherein the sintering aid composition is characterised by a total weight loss from 50 wt.% to 51 wt.% in the temperature range from 30 to 850°C, wherein the weight loss in the temperature range from 290 to 570°C is about 95 wt.% of the total weight loss. Performance characteristics of the sintering aid are improved to manufacture high-strength carbonaceous articles for the metallurgical industry.

## Description

### Field of the invention

The present invention relates to a sintering aid composition for manufacturing carbonaceous articles for the metallurgical industry.

### Background of the invention

The unsatisfactory state of the raw material base for coking, prospective insufficiency of sintering coals for this base, as well as higher environmental protection requirements, have determined the need for introduction of new methods for preparation and carbonization of coals that allow producing coke of the desired quality from lower-caking power charge. One of such methods is introduction of petroleum-derived organic additives into charge. A sintering aid is solid petroleum residues that are added to coal charge instead of fat coals.

A plurality of heavy residues, such as tar, are produced during oil refining. Heavy residues are then subjected to processing so as to manufacture products that are useful in industry. However, the processing of heavy residues generates a large number of unclaimed products that must be utilized. Thus, there is also need for beneficial use of products derivable from secondary procedures of heavy residue processing.

It is known in the art that the modifying action of additives depends on their hydrogen donor properties and aromaticity. The modifying influence of additives is generally explained either by their ability to cause depolymerization, plasticization of coals or by the possibility to form therefrom a liquid-crystalline bond on the interface of coal particles, co-carbonization of which latter may yield coke having an optical texture in the shape of anisotropic mosaics strengthening its structure [Polisar, E.L. Obzhig koksopekovykh materialov s razlichnym soderzhanien svyazuyushchego (Sintering of pitch coke materials with different binder contents) // Khimiya tvyordogo topliva, 1976, No. 64. - P. 53-56.]

It is known from the article "Neftaynoy pek dezintegrirovanniy - al'ternativnoe svyazuyushchee dlya anodov novogo pokoleniya" (Disintegrated Petroleum Pitch as an Alternative Binder for Next-Generation Anodes), A.A. Ugapyev, O.I. Doshlov, published in Vestnik of IrGTU, No. 6, 2013, that residual oils having high density, aromaticity and low sulfur content are the most desirable as raw materials for producing petroleum pitches. However, due to high demand for raw materials of this quality for coking, resources of low-sulfur residues are scanty.

Patent RU2418837 (published on 20.05.2011, int. cl. C01B 57/04) discloses use of a bituminous residue from the process of production of light fractions of oil products as a sintering aid, wherein the bituminous residue has the following characteristics: ash level A_{d} of not more than 2.5%; output of volatiles V_{daf} of not more than 70%; contents of sulfur of not more than 5%; swelling of as high as 20 mm; Roga index (IR) of as high as 10. A drawback of this solution is the absence of control over the content of mechanical impurities in the sintering aid and over the amount of volatile components releasing when the charge is in the plastic state, which may result in unsatisfactory characteristics, such as mechanical strength, of a prepared carbonaceous article. Moreover, this solution does not pay attention to an important parameter, such as the content of aromatic hydrocarbons in the sintering aid. Affecting wettability of the sintering aid, this parameter contributes to an increase in mechanical strength of a sintered body.

### SUMMARY OF THE INVENTION

The technical problem solved by the present invention is the provision of a sintering aid composition, comprising a concentrated residue from slurry-phase hydrocracking of heavy oil feedstock and having excellent performance characteristics for use as a sintering aid for manufacturing high-strength carbonaceous articles for the metallurgical industry.

One of the technical effects of the present invention is the provision of a sintering aid composition made of a concentrated residue from slurry-phase hydrocracking of heavy oil feedstock, which permits manufacturing high-strength carbonaceous articles for the metallurgical industry.

Another technical effect of the present invention is the involvement of a residue from hydrocracking of heavy oil residual feedstock in the production of a sintering aid composition for manufacturing high-strength carbonaceous articles for the metallurgical industry.

One more technical effect of the present invention is the reduction of the environmental impact caused by the production of coal pitches, when carcinogenic substances are released, by means of replacement of a coal pitch with a petroleum sintering aid.

Yet another technical effect of the present invention is the efficient use of a residual product from hydrocracking of heavy oil feedstock in the manufacture of a sintering aid composition.

Said technical problem is solved and said technical results are achieved by sintering aid compositions according to the present invention.

According to the present invention, proposed is a sintering aid composition for manufacturing carbonaceous articles, the composition consisting of a concentrated residue from slurry-phase hydrocracking of heavy oil feedstock, having a content of aromatic hydrocarbons in the range from 23 to 27 wt.%, wherein the sintering aid composition is characterised by a total weight loss from 50 wt.% to 51 wt.% in the temperature range from 30 to 850°C, wherein the weight loss in the temperature range from 290 to 570°C is about 95 wt.% of the total weight loss.

Preferably, the content of carbenes and carboids in the composition is less than 20 wt.%, preferably less than 10 wt.%.

Preferably, the content of asphaltenes in the composition is from about 33 wt.% to about 37 wt.%.

Preferably, the composition comprises at least 10 wt.%, preferably at least 20 wt.% of polymeric petroleum resins.

Preferably, the composition is characterised by comprising 4 to 9 wt.% of mechanical impurities relative to the total weight of the composition.

The ash level of the composition is less than 1 wt.%, preferably between 0.4 and 0.6 wt.%.

Preferably, the sulfur content in the composition is less than 2.5 wt.%, preferably between 1.4 and 1.7 wt.%.

Preferably, the heavy oil feedstock used to manufacture the composition is tar.

Preferably, the composition is obtained via the slurry-phase hydrocracking technology, the unconverted residue of which is a slurry of a porous coal additive, which latter is a solid phase of the slurry, in a liquid phase of unconverted hydrocarbons.

Preferably, the concentrated residue from slurry-phase hydrocracking is an unconverted residue from slurry-phase hydrocracking that has undergone the steps of mixing with a solvent, separating from the solid phase, vacuum distillation of the solvent, and the concentration step.

Preferably, the solid phase is separated from the liquid phase by means of centrifugal forces.

Preferably, the solvent is an aromatic solvent, more preferably, an aromatic gas oil of catalytic cracking.

Preferably, the concentrated hydrocracking residue is obtained by evaporating the unconverted residue free of solid phase and solvent, more preferably, by vacuum evaporating from a thin film.

Preferably, the coal additive is characterised by a Barrett-Joyner-Halenda (BJH) mesopore volume of at least 0.07 cm³/g and less than 0.2 cm³/g. In terms of this application, mesopores shall be deemed to include pores having a diameter between 10 and 200 nm, more preferably, between 20 and 50 nm.

### BRIEF DESCRIPTION OF THE FIGURES

Fig. 1 displays overlapping of thermal curves of 3 iterations of a CRHT sample.
Fig. 2 displays thermal curves of a CRHT sample (1^{st} parallel). The TGA curve is denoted by square markers, the DTG curve is denoted by triangular markers, and the DTA curve is denoted by round markers.
Fig. 3 displays thermal curves of a CRHT sample (2^{nd} parallel). The TGA curve is denoted by square markers, the DTG curve is denoted by triangular markers, and the DTA curve is denoted by round markers.
Fig. 4 displays thermal curves of a CRHT sample (3^{rd} parallel). The TGA curve is denoted by square markers, the DTG curve is denoted by triangular markers, and the DTA curve is denoted by round markers.
Fig. 5 displays overlapping of thermal curves of 3 iterations of a CTP sample.
Fig. 6 displays thermal curves of a CTP sample (1^{st} parallel). The TGA curve is denoted by square markers, the DTG curve is denoted by triangular markers, and the DTA curve is denoted by round markers.
Fig. 7 displays thermal curves of a CTP sample (2^{nd} parallel). The TGA curve is denoted by square markers, the DTG curve is denoted by triangular markers, and the DTA curve is denoted by round markers.
Fig. 8 displays thermal curves of a CTP sample (3^{rd} parallel). The TGA curve is denoted by square markers, the DTG curve is denoted by triangular markers, and the DTA curve is denoted by round markers.
Fig. 9 displays the TGA, DTG, DTA curves of CRHT and CTP samples: the TGA curve is denoted by square markers, the DTG curve is denoted by triangular markers, and the DTA curve is denoted by round markers.
Fig. 10 displays an IR transmission spectrum of a CRHT sample in 3 iterations: the curve with round markers denotes the first iteration, the curve with triangular markers denotes the second iteration, the curve with square markers denotes the third iteration.
Fig. 11 displays an IR transmission spectrum of a CTP sample.
Fig. 12 displays the result of comparison of the IR spectrum of a CRHT sample (the curve with square markers) with an IR spectrum from a spectral database library (the curve with round markers).
Fig. 13 displays IR spectra of a CRHT sample (the curve with square markers) and a CTP sample (the curve with round markers).

### DETAILED DESCRIPTION OF THE INVENTION

The composition according to the present invention includes a concentrated residue from slurry-phase hydrocracking of heavy oil feedstock.

The heavy oil feedstock is preferably tar. However, the raw materials for hydrocracking may also be other high-viscosity feedstock, for example, fuel oil, heavy gas oil, etc.

In the present invention, slurry-phase hydrocracking is liquid-phase hydrocracking the unconverted residue of which is the slurry of a spent coal additive (solid phase) in the liquid phase of unconverted high-boiling hydrocarbons.

The hydrocracking residue is an unconverted residue that has undergone the step of purification from the solid phase.

The step of purification comprises mixing the slurry with an aromatic solvent, separating the solvent-diluted liquid phase from the solid phase, for example, by means of centrifugal forces, and stripping the solvent from the mixture of the solvent with the unconverted residue.

The coal additive is characterised by a Barrett-Joyner-Halenda (BJH) mesopore volume of at least 0.07 cm³/g and less than 0.2 cm³/g. In this invention, mesopores shall be deemed to include pores having a diameter between 10 and 200 nm, preferably, between 20 and 50 nm.

The concentrated hydrocracking residue is a residue from slurry-phase hydrocracking that has undergone the step of concentration, in particular, thin-film evaporation.

An advantage of the hydrocracking process for producing a sintering aid is that sulfur contained in the oil feedstock, when reacting with hydrogen, generates hydrogen sulfide, which latter escapes together with gaseous hydrocracking products. Thus, the unconverted hydrocracking residue has a reduced sulfur content, which is crucial for properties of carbonaceous articles further manufactured via a sintering aid. An important issue in the manufacture of coke or carbon electrodes is their inertness to the reaction with CO₂, especially at high temperatures, whereas the presence of sulfur increases reactivity of such articles.

During the manufacture of sintered carbonaceous articles whose mechanical strength must be high, heavy demands are imposed on the composition of charge components.

The present inventors have discovered that the concentrated residue from slurry-phase hydrocracking according to the instant invention has high aromatics content, which is conditioned by the preparation process thereof. More specifically, despite the presence of hydrogen, compaction side processes occur during hydrocracking due to recombination of radicals and carbocations. Aromatic hydrocarbons begin to get involved in polycondensation reactions, with their molecular weight and, as a consequence, boiling point getting higher, which determines saturation of the residue with high boiling resins, including aromatic ones.

At the same time, apart from aromatic compounds, other high molecular weight compounds, which are undesirable for sintering aids, may be present in the hydrocracking residue.

According to the present invention, slurry-phase hydrocracking employs activated carbon, namely, a porous coal additive in the form of a particulate matter with a high mesopore content. The fresh coal additive used in slurry-phase hydrocracking in the present invention has a Barrett-Joyner-Halenda (BJH) mesopore volume of at least 0.07 cm³/g, preferably at least 0.12 cm³/g, even more preferably about 0.2 cm³/g. Pores having a diameter between 10 and 200 nm, preferably, between 20 and 50 nm, relate to mesopores. First and foremost, they increase the area of the liquid-solid interface, where hydroconversion processes take place. During hydrocracking, this facilitates active conversion of asphaltenes present in the feedstock to resins, predominantly to high-aromatic resins, prevention of their compaction into carbenes and carboids, which are undesirable compounds in sintering aid compositions that lower caking power of such aids. In addition, those carbenes and carboids that have already been present in the feedstock are adsorbed in mesopores, which are capable of intaking them owing to the predetermined size - molecules of such compounds having a multi-layer clustered structure penetrate the mesoporous material and settle in pores.

For these reasons, the hydrocracking residue is characterised by high content of aromatics and low content of asphaltenes, carbenes, and carboids.

The unconverted residue from slurry-phase hydrocracking comprising a spent coal additive is then subjected to separation into a solid phase and a liquid phase. The liquid phase is a rather viscous liquid consisting of high boiling point hydrocarbons. Viscosity of the liquid phase must be lowered to separate the solid phase from the liquid phase. A solvent, preferably, an aromatic one, which is free of paraffins, the latter being natural precipitants of asphaltenes, is employed for this purpose. A preferable embodiment is an aromatic gas oil of catalytic cracking. The unconverted residue is mixed with a solvent and separated by conventional techniques: precipitation, floatation, by means of centrifugal forces. Separation by means of a cyclone is the most preferable. The spent coal additive containing metals, including nickel, vanadium, asphaltenes, carbenes, carboids, is discharged from the unconverted residue, and the mixture of the hydrocracking residue and the solvent is subjected to evaporation in a vacuum tower, wherein the hydrocracking residue is substantially separated from the solvent and discharged as vacuum bottoms. As a result of thorough separation of the spent coal additive as such and, correspondingly, of said adsorbed components contained therein, which may increase the portion of the incombustible residue, the ash level of the unconverted hydrocracking residue decreases. A further advantage of removal of the spent coal additive is that the sintering aid composition according to the present invention comprises from 4 to 9 wt.% of mechanical impurities relative to the total weight of the composition. The present inventors have discovered that said amount of mechanical impurities does not produce an adverse effect on characteristics of the composition and the coke produced when the composition is used. Thus, when the composition according to the present invention is utilized in blast-furnace coke, said amount of mechanical impurities does not cause filter clogging in a blast furnace during their entrainment in a coke-loaded blast furnace, while the calorific value of blast-furnace coke remains high. The aforementioned amount of mechanical impurities permits producing articles with proper strength. Without wishing to be bound by theory, the present inventors suppose that, in regions of the presence of particulate mechanical impurities, when the sintering aid composition is used, centers of elevated surface energy are generated that may potentially be points of onset of cracking in an article. For these reasons, if a sintering aid composition contains a higher amount (over 10 wt.%) of mechanical impurities, mechanical strength/cracking resistance of the produced carbonaceous article may diminish, and the ash level of the sintering aid as such rises.

After separating the spent coal additive, the purified residue from slurry-phase hydrocracking is further evaporated to strip the remaining light hydrocarbons and concentrate therein fractions with an initial boiling point of greater than 500°C. Harsher conditions are thus required: deeper vacuum and higher temperature than those generated in a vacuum tower in the preceding step. Provision of such conditions in a vacuum tower, in which extensive bottoms are present, would amplify polycondesation reactions, i.e. would increase coking. Therefore, thin-film evaporation is predominantly used, because, in a thin film in vacuum, evaporation runs faster at lower temperatures due to better heat distribution per unit of area. The concentration process contributes to accumulation of fractions having an initial boiling point of greater than 500°C, which, with account of the preceding processes, are predominantly high boiling resins, including highly aromatic ones.

To allow concentration, the residue from hydrocracking of tar is applied as a thin film onto an internal surface of a thin-film evaporator. Due to an increase in the total surface of evaporation under the influence of high temperature of 420-480°C and due to the presence of vacuum (under the residual pressure from minus 85 to minus 99 kPa relative to atmospheric pressure), the residue is stripped, the highly volatile components are removed, and the residue is concentrated without any risk of coking.

The bottom product from the evaporator is a concentrated hydrocracking residue that may be used as a sintering aid for the manufacture of various kinds of products of the by-product coking industry. Suitable products may be, for example, coke, more specifically, metallurgical coke, cupola coke, particularly, formcoke, wherein the sintering aid is used within the charge for their manufacture. In addition, the sintering aid can be used as a part of the charge for the manufacture of carbon electrodes, such as an anode or catode for galvanic processes, specifically, for the production of aluminum. The sintering aid may also be used as a part of the charge for the preparation of self-sintering electrodes. The concentrated residue may also be subjected to further processing, for example, in a delayed coking unit, for manufacturing petroleum coke or anode coke.

The so-obtained concentrated residue having a low sulfur content of up to 2.5 wt.%, in combination with a low ash level of up to 1 wt.%, is the most suitable for being used as a sintering aid for carbonaceous articles for the metallurgical industry.

In order to illustrate the possibility of producing the sintering aid composition according to the invention, the following example of the production method thereof is given below.

### Example

Heavy oil feedstock, which is tar produced after stripping of lower boiling fractions from heavy oil of the Urals grade and having an initial boiling point of from 510°C and density at 20°C of over 1000 kg/m³, was mixed with 1.5 wt.% (per the weight of tar) of a coal additive of two particle sizes: a coarse fraction having a diameter of about 1 mm, and a fine fraction having a diameter of about 0.3 mm. The coarse fraction and the fine fraction were characterised by different mesopore volumes: the BJH mesopore volume for the fine fraction was at least 0.07 cm³/g, while the BJH mesopore volume for the coarse fraction was at least 0.12 cm³/g for more efficient adsorption of asphaltenes, molecules of which latter have the size from 40 to 90 nm for tar produced from Urals crude oil. The coal additive had a BET specific surface area of at least 230 m³/g and less than 1230 m³/g.

The feedstock, in the form of a slurry, was fed to SPH (slurry-phase hydrocracking), where hydrogen was supplied at a temperature of 450°C and at a pressure of 20 MPa. The mixture of the coal additive, tar, and gas passed through 3 SPH reactors, thereby generating a mixture of gaseous products and a slurry consisting of a spent coal additive and an unconverted high boiling residue. Said mixture was directed to a separation step, after which the gaseous stream was conveyed to gas-phase hydrocracking, and the slurry was directed to an additive washing section consisting of a mixing tank and a cyclone separating tank.

The slurry from the unconverted high boiling residue, together with the spent solid additive, consumed at a rate of 15-20 ton/h, at about 420°C and at a pressure of less than 0.3 MPa, was mixed in a mixing tank with a solvent, which latter is an aromatic light gas oil of catalytic cracking, consumed at a rate of 30-35 ton/h, having a temperature of about 220-260°C. For the avoidance of excessive evaporation of the solvent, excess pressure of 0.15 to 0.35 MPa is maintained in the mixing tank and adjusted by a system of regulating valves.

The stream was then fed into a separating tank equipped with a cyclone apparatus, where the spent additive was separated by centrifugal forces from the unconverted high boiling residue in a mixture with the aromatic light gas oil of catalytic cracking.

After the washing section, the spent coal additive was removed from the process, and the isolated unconverted high boiling residue heated to below 385°C, in a mixture with the aromatic light gas oil of catalytic cracking, entered the vacuum tower. Vacuum in the top portion of the vacuum tower had a pressure of about 20 mm Hg, the differential pressure between the bottom of the vacuum tower and the lower packed bed, including the seal pan, was about 7 mm Hg, the temperature of the bottom of the vacuum tower was about 290°C.

Products produced during vacuum distillation are:
- light vacuum gas oil (LVG) and purified vacuum gas oil (PVG), and
- an isolated heavy residue, which is a residual product from hydrocracking of tar (RPHT).

The isolated heavy residue for concentration was fed into a thin-film evaporator (TFE) via a collector with discrete feed points.

The temperature in the TFE was maintained at 400°C. The pressure in the TFE was maintained at minus 95 kPa relative to the atmospheric pressure (6.325 kPa of vacuum).

The film was 1.12 mm thick and the thickness was constant along the height of the apparatus.

The residence time of the aforementioned bottom residue at the predetermined film thickness in the TFE was 20 s.

The concentrated residue of hydrocracking of tar produced according to the proposed method has characteristics that are set out in Table 1.

**Table 1**

| Indices to be determined | Units | Test results | Regulatory documents for testing methods |
|---|---|---|---|
| Ash level, dry basis, A^{d} | % | 0.6 | GOST 22692-77 |
| Volatile matter, dry basis, V^{d} | % | 52.4 | GOST 22898-78 |
| Total sulfur, dry basis, Sₜ^{d} | % | 2.23 | GOST 32465-2013 |
| Total carbon, dry basis, Cd | % | 87.3 | GOST 32979-2014 |
| Mass fraction of water, W | % | 0.1 | GOST 2477-2014 |
| Mass fraction of insolubles in toluene, α | % | 25 | GOST 7847-2020 |
| Mass fraction of substances insoluble in quinoline, α₁ | % | 5 | GOST 10200-2017 |
| Mass fraction of mechanical impurities | % | 5 | GOST 6370-83 |
| Softening (melting) point, ring-and-rod, T | °C | 113 | GOST 9950-2020 |
| Softening (melting) point, ring-and-ball, T | °C | 128 | GOST 11506-1973 |
| Mettler softening (melting) point, T | °C | 131 | GOST 32276-2013 |
| Gray-King coke type | type | G13 | GOST 16126-91 (ISO502-82) |
| Caking capacity, G (1:5) | units | 80 | GOST ISO 15585-2013 |
| Caking capacity, G (1:7) | units | 68 | GOST ISO 15585-2013 |

The softening point of the concentrated residue can be adjusted by modifying concentration process conditions (temperature, pressure, exposure time) in a thin-film evaporator.

Surprising results concerning the structure of produced articles have been obtained when the concentrated residue of the present invention was used as a sintering aid. Two formcoke samples were prepared from anthracite fines and a binder. As a binder, sample 1 comprises CTP (coal-tar pitch), and sample 2 comprises the sintering aid according to the present invention. The CTP-based sample had a network of through cracks lowering strength characteristics of the article. Simultaneously, the sintering aid-based sample was characterised by dense structure, absence of cracks, while few and part-through exit points of gases (small channels) were observed.

On the one hand, such a structure is conditioned by good wettability owing to high content of aromatic compounds in the present sintering aid composition, which ensures strong bonds among particles of the binder. On the other hand, the sintering aid composition is characterised by the most intense release of volatiles in the range of temperatures when its material is in the plastic state, i.e. from 290 to 570°C. This is advantageous in terms of several aspects. In particular, gases escaping the article form small channels (ductuli) that are ready to be filled in with the material again due to its plasticity, thereby providing the dense structure of the article without cavities, pores, and cracks. Moreover, since the majority of volatiles escape precisely when the sintering aid material is in the plastic state, then, during transformation of semi-coke into coke, i.e. in the range of temperatures of 570°C or more, the gas emission is so little that shrinkage of the produced article occurs slowly and uniformly, hence article's fissuring is not great. The inventors associate this phenomenon with the low content of carbenes and carboids, which are coke precursors, in the composition, which attaches more stable properties and a longer plasticity period to the composition.

The sintering aid according to the present invention comprises a considerable amount of high boiling resins, including highly aromatic resins, which play an important role for wetting and impregnation of bulk of coal and its cementing as it further hardens. Owing to high wettability, the sintering aid establishes a strong bond among particles. At that, gases escaping the charge overcome significant resistance thereby forming openings. In other cases, i.e. at lower resistance of the material to escaping gases, the material breaks, which results in fissuring of the article and reduces its mechanical strength.

Comparative tests of the obtained concentrated residue from hydrocracking of tar according to the present invention and a sample of coal-tar pitch were performed.

### 1. Thermogravimetric analysis (TGA)

Thermal behavior of a sample of a concentrated residue from hydrocracking of tar (hereinafter referred to as CRHT) and a sample of coal-tar pitch (hereinafter referred to as CTP) was studied on a synchronous thermal analyzer STA 600 (Perkin Elmer). The studies employed the thermogravimetric analysis (TGA) and differential thermogravimetry (TG-DTG).

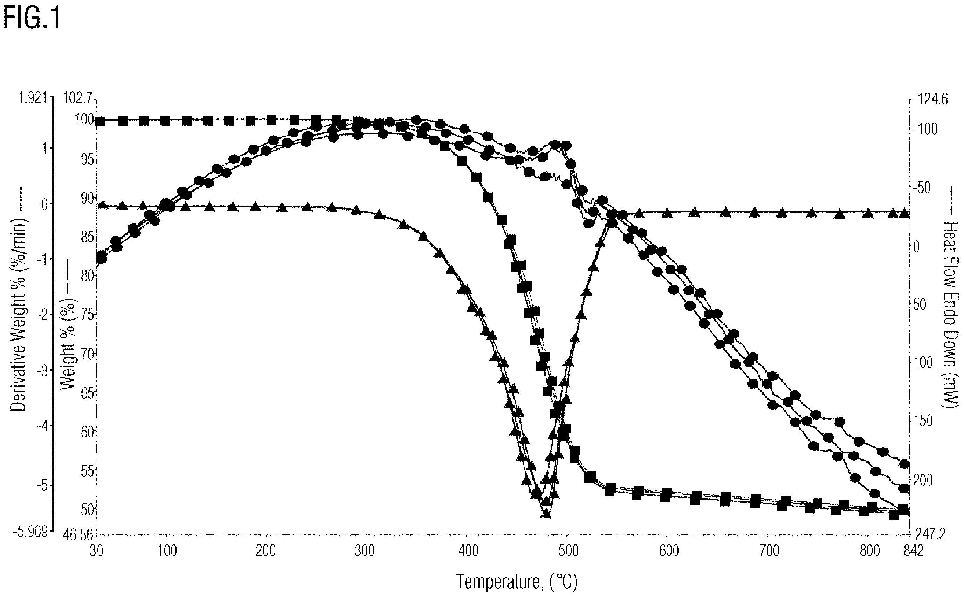

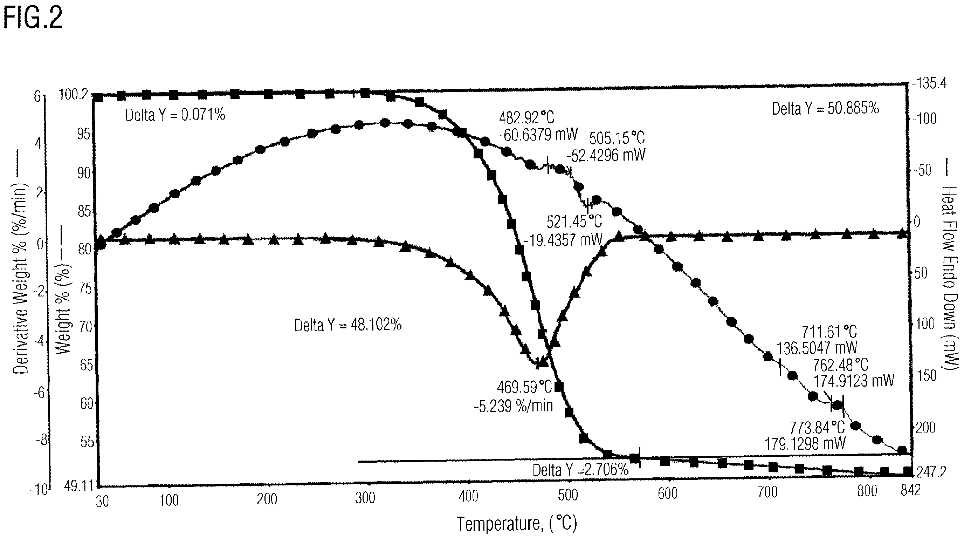

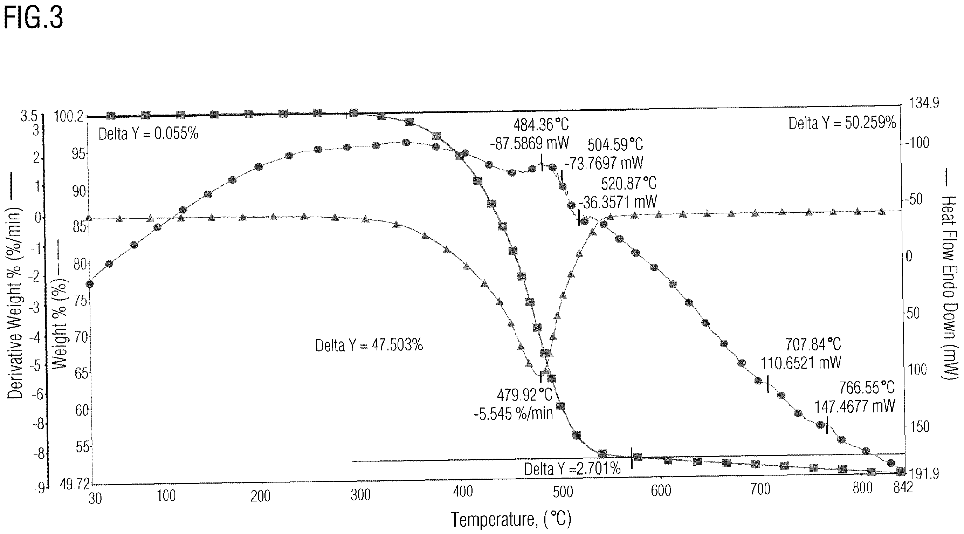

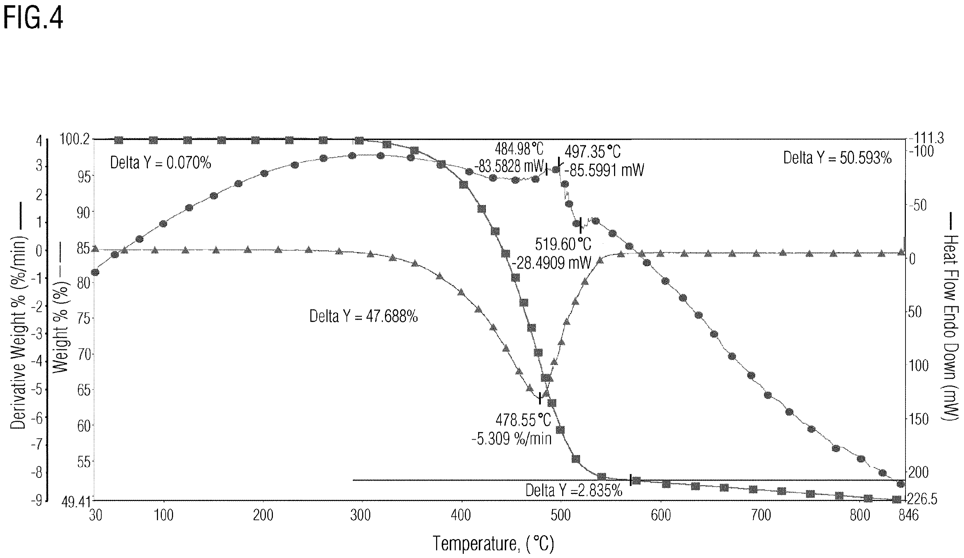

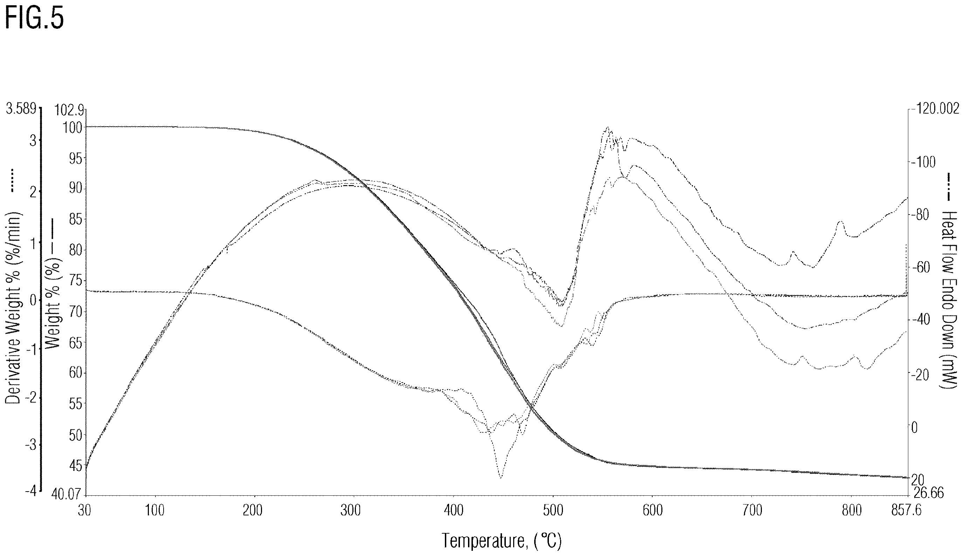

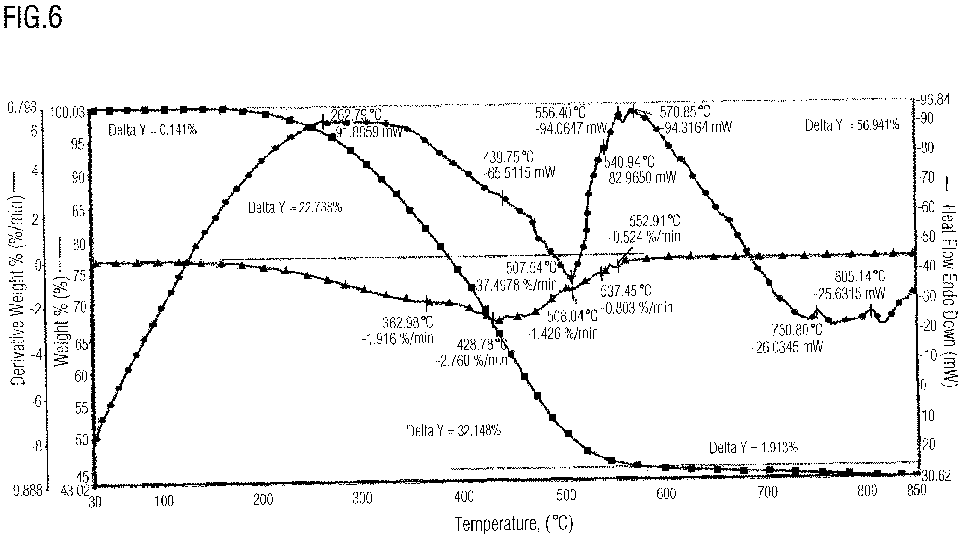

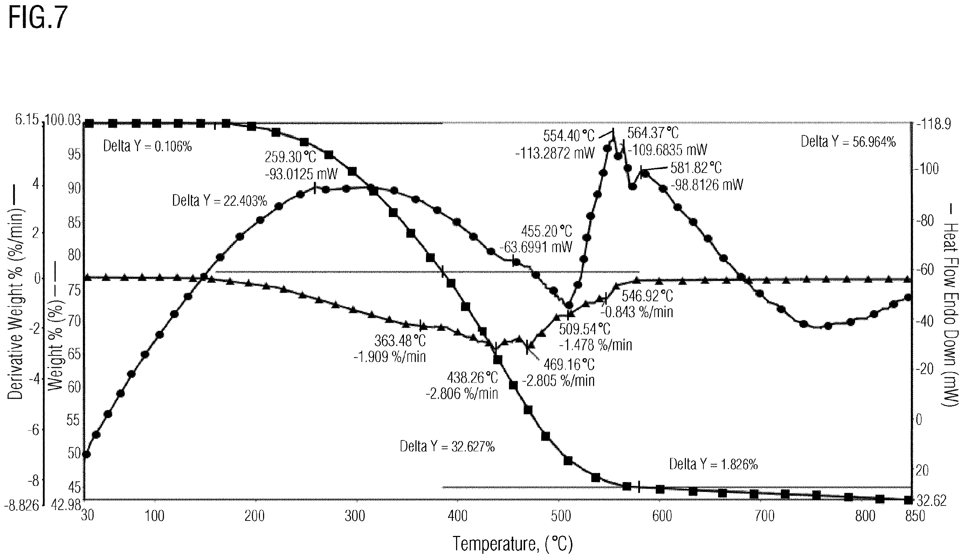

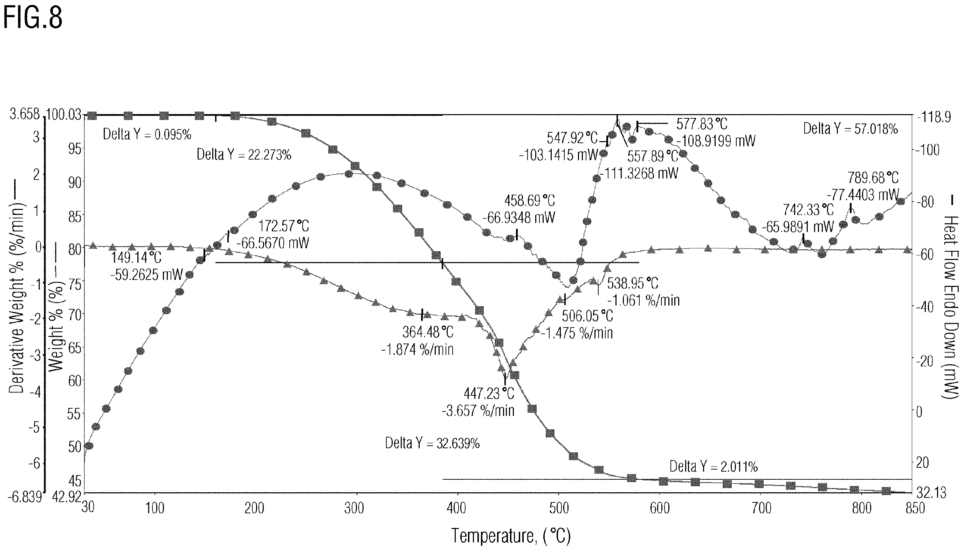

The samples under investigation weighing -25-30 mg were heated in the temperature range between 30 and 850°C at a rate of 10°C/min in a corundum crucible. The analysis was performed in an inert gas (nitrogen) atmosphere (the gas feed rate was 20 ml/min). Each sample was analyzed in 3 iterations. The data obtained were processed via a special Pyris software utility. Graphical representations of results of the analyses are shown in Figs. 1-8. Data on weight loss (TGA), with peak maximums (DTG) being indicated, are set out in Table 2.

**Table 2 - Thermal analysis results (in nitrogen atmosphere)**

| Nº Sequence number | Sample name | Range of temperatures (maximum effect), °C weight loss, wt.%. | | | | | | Total weight loss in the range of 30-850 °C, wt.% |
|---|---|---|---|---|---|---|---|---|
| 1 | C RHT | 30-290 (-) 0.07 | | 290-570 (470) 48.10 | | 570-850 (-) 2.71 | | 50.88 |
| | | 30-290 (-) 0.06 | | 290-570 (480) 47.50 | | 570-850 (-) 2.70 | | 50.26 |
| | | 30-290 (-) 0.07 | | 290-570 (478) 47.69 | | 570-850 (-) 2.83 | | 50.59 |
| 2 | C TP | 30-160 (-) 0.1 4 | 160-385 (363) 22.74 | | 385-580 (428) 32.15 | | 580-850 (-) 1.91 | 56.94 |
| | | 30-160 (-) 0.1 1 | 160-385 (363) 22.40 | | 385-580 (438) 32.63 | | 580-850 (-) 1.83 | 56.97 |
| | | 30-160 (-) 0.1 0 | 160-385 (364) 22.27 | | 385-580 (447) 32,64 | | 580-850 (-) 2.01 | 57.02 |

| | | | | | | | | |
|---|---|---|---|---|---|---|---|---|
| *(-)there is no clearly expressed maximum of thermal transformation. | | | | | | | | |

As a result of the thermogravimetric analysis of the CRHT sample in the nitrogen atmosphere, slight loss of weight of 0.06-0.07 wt.% is observed on the TG curve in the low-temperature range of 30-290°C. The main weight loss of 47.50-48.10 wt.% is detected in the temperature range between 300 and 570°C. The exothermic effect with several maximums at 465°C, 491°C, 497°C is observed in this range on the TGA curve. With a further temperature increase upto 850°C, a gradual loss of mass is observed (2.9 wt.%). The exothermic effect having a maximum at 626°C is detected in the high-temperature range on the DTA curve. Total loss weight under heating between 30 and 850°C is 50.26 - 50.88 wt.%.

Slight loss of weight of 0.10-0.14 wt.% is detected on the TG curve of the CTP sample in the low-temperature range of 30-160°C. The main weight loss range is between 160 and 580°C and comprises 54.89 - 55.03 wt.%. The DTA curve displays the endothermic effect in this range, having its maximum at 507°C, which effect turns into the exothermic effect having implicit maximums at 482°C and 504°C. As the temperature on the DTA curve rises, several exothermic effects having a maximum at 556°C are detected. The total weight loss of the CTP sample heated to 30-850°C was 56.94 - 57.02 wt.%.

Weight losses in the ranges of 370-430°C, 430-480°C, 480-600°C for CRHT and CTP samples are set out in Table 3.

**Table 3 - Weight loss in certain ranges**

| S e q u e n c e n u m b er | Sample name | Weight loss in a temperature range, wt.% | | |
|---|---|---|---|---|
| | | (370-430)°C | (430-480)°C | (480-600)°C |
| | CRHT | 9.51 | 21.52 | 14.95 |
| | | 9.23 | 19.10 | 17.13 |
| | | 9.64 | 19.65 | 16.22 |
| | CTP | 13.45 | 12.84 | 9.02 |
| | | 13.38 | 12.74 | 9.62 |
| | | 11.93 | 14.24 | 9.49 |

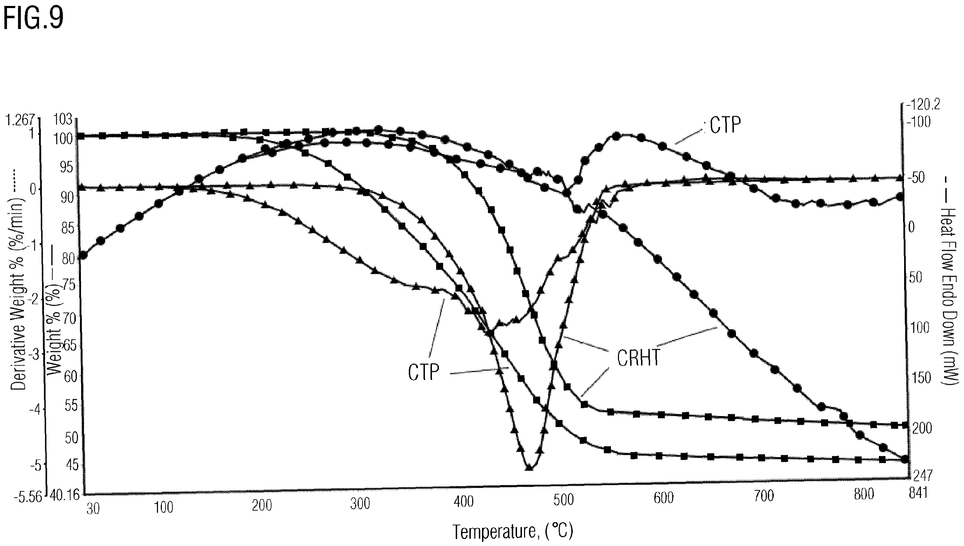

As a result of the thermogravimetric analysis, the largest weight loss of the CRHT sample is registered in the range of 300-570°C and is 47.50 - 48.10 wt.%; the largest weight loss of the CTP sample is between 160-580°C and is 54.89 - 55.03 wt.%. The endothermic effect with a maximum at 507°C, which turns into the exothermic effect with implicit maximums at 482°C and 504°C, is observed on the DTA curve of the CTP sample. The exothermal effect having several maximums at 465°C, 491°C, 497°C is observed in this range on the DTA curve of the CRHT sample. The total weight loss of the CRHT sample, when heated to 30-850°C, was 50.26 - 50.88 wt.%, while this value for the CTP sample was 56.94 - 57.02 wt.%. Comparative curves for the CRHT and CTP samples are displayed in Fig. 9.

### 2. Fourier-transformation infrared spectroscopy

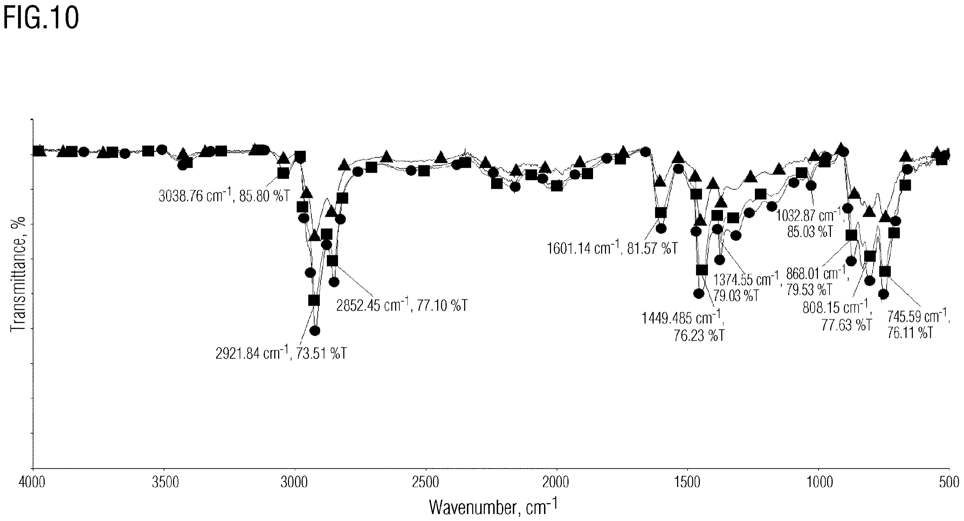

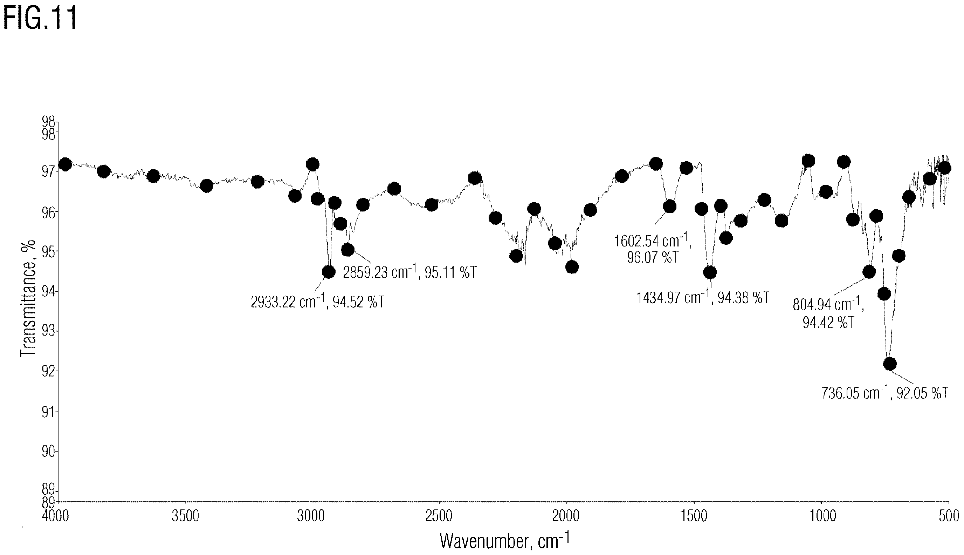

CRHT and CTP samples were studied by Fourier-transformation infrared spectroscopy. The study was conducted on a Frontier IR Fourier transformation spectrometer (Perkin Elmer) using an attenuated total reflectance (ATR) accessory. Graphical representations of results of Fourier-transformation infrared spectroscopy are set out in Figs. 10-11.

The IR spectrum of the studied samples contains bands that are typical of skeletal vibrations of an aromatic ring (3038 cm⁻¹, 1601 cm⁻¹). There are also strong absorption bands in the 700-900 cm⁻¹ region, which may be the evidence of the presence of mono-, di-, and trialkyl-substituted aromatic compounds in the sample. Absorption bands at 2921 cm⁻¹ and 1450 cm⁻¹ are characteristic of =CH₂ group vibrations, while bands at 2852 cm⁻¹ and 1374 cm⁻¹ are characteristic of methyl group vibrations.

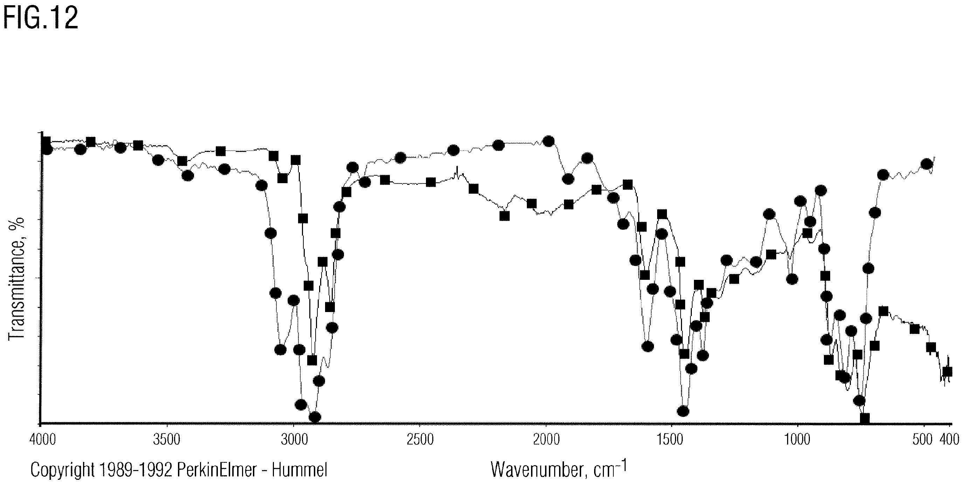

The obtained IR spectra of CRHT samples were compared with IR spectra from a spectral database library, the result of comparison is set out in Fig. 12.

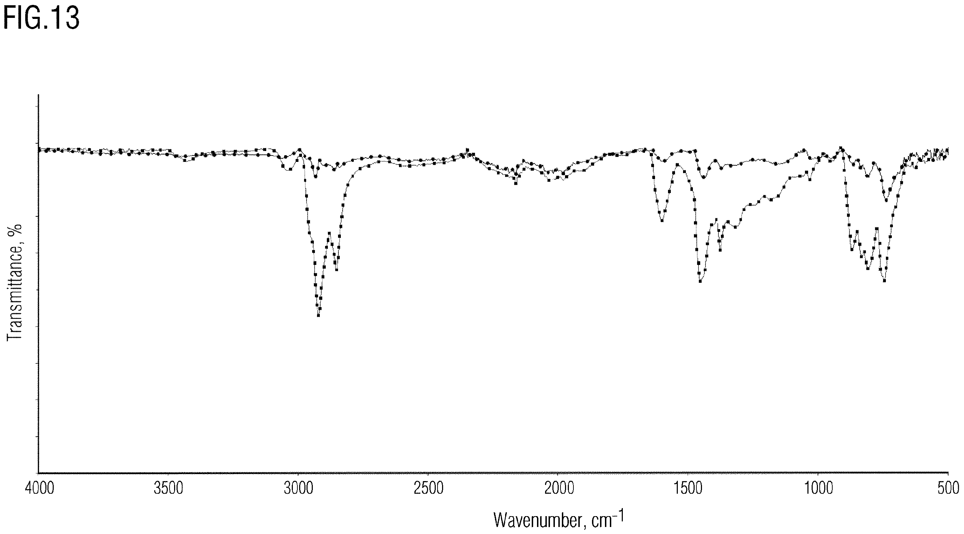

The IR spectra of CRHT and CTP were also compared with one another (Fig. 13). The comparison demonstrates that the IR spectrum of the CPT sample is distinguished by small intensity of absorption bands.

### 3. SARA analysis

### SARA analysis procedure

A portion of the CTP sample (the procedure for CRHT is the same) was placed in a Soxhlet extraction apparatus and extracted in a triple mixture of solvents (toluene, chloroform, isopropyl alcohol); the process was continued until the solution became transparent. The mixture of solvents was then distilled off by a rotary evaporator, and n-hexane was poured in addition. The mixture was stirred, and the flask was kept in a dark place for a night. The contents of the flask were filtered off through paper filters. Maltenes passed into the solution, with asphaltenes, carbenes, and carboids remaining on the filter, which were placed in a Soxhlet extraction apparatus afterwards. The extraction was stopped when total decoloration of the running down solvent was achieved. The contents of a receiving flask were distilled off with a rotary evaporator.

A glass chromatography column filled with a pre-calcined adsorbent, neutral alumina for chromatography, was used to separate maltenes. Prior to loading a sample of maltenes, n-hexane was poured in the column to preliminarily moisten the filler. Maltenes in the form of a solution in n-hexane were then loaded into the column. Thereafter, n-hexane, toluene and a toluene/isopropyl alcohol mixture were poured in the column in the aforementioned order to eluate saturated hydrocarbons, aromatic compounds, and resins, respectively. Each fraction was evaporated by means of a rotary evaporator and their content was determined.

The filter with asphaltenes, carbenes, and carboids positioned in the Soxhlet extraction apparatus was extracted in toluene until total decoloration of the solvent, which latter was evaporated by means of a rotary evaporator, and the content of asphaltenes was determined.

After that, the same filter was extracted in the Soxhlet extraction apparatus in carbon bisulfide until a transparent solvent run down, then evaporated by a rotary evaporator, and the content of asphaltenes was determined. The quantity of carboids was determined on the basis of the residue on the filter.

**Table 4 - SARA analysis of CTP**

| Groups of hydrocarbons | 1 parallel | 2 parallel | Average |
|---|---|---|---|
| Saturated hydrocarbons | 2.31% | 1.01% | 1.66% |
| Aromatic hydrocarbons | 14.33% | 15.78% | 15.04% |
| Resins | 0.97% | 1.12% | 1.05% |
| Asphaltenes | 9.69% | 9.5% | 9.60% |
| Residue (carbenes and carboids) | 72.7% | 72.59% | 72.65% |
| **Total** | **100.00%** | **100.00%** | **100.00%** |

**Table 5 - SARA analysis of CRHT**

| Groups of hydrocarbons | 1 parallel | 2 parallel | Average |
|---|---|---|---|
| Saturated hydrocarbons | 6.37% | 12.73% | 9.55% |
| Aromatic hydrocarbons | 26.53% | 23.54% | 25.04% |
| Resins | 20.66% | 10.53% | 15.59% |
| Asphaltenes | 37.04% | 33.71% | 35.38% |
| Residue (carbenes and carboids) | 9.4% | 19.49% | 14.44% |
| **Total** | **100.00%** | **100.00%** | **100.00%** |

The results of the SARA analysis demonstrate that the CRHT comprises, in average, 10% more aromatics and almost by 15 times more resins, which play a key role in binding, too, when the sintering aid is used.

Furthermore, the SARA analysis shows that the content of poorly soluble high molecular weight hydrocarbons, such as carbenes and carboids, is virtually 5 times lower. These compounds have a very low sintering and binding function, which demonstrates again effectiveness of using the CRHT as a sintering aid.

It was concluded on the basis of the analyses that the CRHT has a higher content of aromatic hydrocarbons and lower content of carbenes and carboids compared to the CTP, hence the wettability of the sintering aid of the present invention was improved and the plasticity period thereof was extended. The volatiles that escape after 480°C during sintering do not disrupt the structure of an article to be sintered, which would cause cracking, but form few and part-through exit points of gases instead.

## Claims

1. A sintering aid composition for manufacturing carbonaceous articles, consisting of a concentrated residue from slurry-phase hydrocracking of heavy oil feedstock, having a content of aromatic hydrocarbons in the range from 23 to 27 wt.%, and a content of mechanical impurities from 4 to 9 wt.% relative to the total weight of the composition.

2. The composition according to claim 1, in which the content of carbenes and carboids is not greater than 20 wt.%, preferably not greater than 10 wt.%.

3. The composition according to claim 1, in which the content of asphaltenes is from 33 wt.% to 37 wt.%.

4. The composition according to claim 1 **characterised by** comprising at least 10 wt.%, preferably at least 20 wt.% of polymeric petroleum resins.

5. The composition according to claim 1, in which the ash level is not greater than 1 wt.%.

6. The composition according to claim 1, in which the sulfur content is not greater than 2.5 wt.%, preferably is in the range from 1.4 to 1.7 wt.%.

7. The composition according to claim 1, wherein the composition is **characterised by** a total weight loss from 50 wt.% to 51 wt.% in the temperature range from 30 to 850°C, wherein the weight loss in the temperature range from 290 to 570°C is from 94.0 to 96.0 wt.% of the total weight loss.

8. The composition according to claim 7, in which the weight loss in the temperature range from 290 to 570°C is 95 wt.% of the total weight loss.

9. A process for manufacturing the sintering aid composition according to any one of claims 1- 8, including the steps of:
- slurry-phase hydrocracking of heavy oil feedstock, wherein the unconverted residue from slurry-phase hydrocracking is a slurry of a porous coal additive, which latter is a solid phase of the slurry, in a liquid phase of unconverted hydrocarbons;
- mixing the unconverted residue from slurry-phase hydrocracking with a solvent;
- separating the solid phase of the unconverted residue from slurry-phase hydrocracking from the mixture of the liquid phase with a solvent;
- vacuum distillation of the solvent from the liquid phase of the unconverted residue;
- concentrating the unconverted residue to produce a sintering aid composition.

10. The process according to claim 9, in which the heavy oil feedstock is tar.

11. The process according to claim 9, in which the solid phase is separated from the liquid phase by means of centrifugal forces.

12. The process according to claim 9, in which the solvent is an aromatic solvent, preferably an aromatic gas oil of catalytic cracking.

13. The process according to claim 9, in which the concentration is performed by evaporating the unconverted residue free of solid phase and solvent, preferably by vacuum evaporating from a thin film.

14. The process according to claim 9, in which the coal additive is **characterised by** a Barrett-Joyner-Halenda (BJH) mesopore volume of at least 0.07 cm³/g and not more than 0.2 cm³/g.

15. The process according to claim 14, in which mesopores include pores having a diameter from 10 to 200 nm, preferably from 20 to 50 nm.
